# EUROPÄISCHE PATENTSCHRIFT

(11) **EP 1 947 712 B1**
(45) Veröffentlichungstag und Bekanntmachung des Hinweises auf die Patenterteilung: **13.02.2013**
(21) Anmeldenummer: 06026122.9
(22) Anmeldetag: 16.12.2006
(51) Int. Cl.: H01M 2/38

(54) **Vorrichtung zum Zuführen eines Gasstromes in eine Zelle eines Akkumulators**
Device for conducting a gas stream into an accumulator cell
Appareil pour amener un flux de gaz dans une cellule d'un accumulateur

(43) Veröffentlichungstag der Anmeldung: 23.07.2008
(73) Patentinhaber: HOPPECKE Batterien GmbH & Co. KG, 59929 Brilon (DE)
(72) Erfinder: Kesper, Heinrich, 34508 Willingen (DE)
(74) Vertreter: Stenger, Watzke & Ring

(56) Entgegenhaltungen:
- EP-A- 0 585 780
- EP-A- 1 047 142
- EP-A- 1 672 723
- DE-U1- 20 302 233
- US-A- 4 269 906
- PROG.POLYM.SCI., Bd. 26, 2001, Seiten 721-798, XP002423435

## Beschreibung

Die Erfindung betrifft eine Vorrichtung zum Zuführen eines Gasstromes in eine Zelle eines Akkumulators.

Beim Laden von üblichen Akkumulatoren kommt es an der Kathode zur Bildung von konzentrierter Schwefelsäure durch eine Redoxreaktion zwischen Kathode und Elektrolyt. Aufgrund des gegenüber dem Elektrolyt höheren spezifischen Gewichts fällt die konzentrierte Schwefelsäure in den unteren Teil der Akkumulatorzelle ab. Diese, so genannte Eleytrolytschichtung verringert den Wirkungsgrad des Akkumulators; ferner können Schäden an den Akkumulatorplatten entstehen.

Aus dem Stand der Technik sind daher Vorrichtungen zum Umwälzen des Elektrolyts bekannt, wodurch eine Elektrolytschichtung verhindert, bzw. aufgehoben werden kann. Die EP 1 672 723 A2 beschreibt beispielsweise eine Vorrichtung, bei der Druckluft über ein Schlauchsystem in die Zelle eines Akkumulators eingeleitet wird, wodurch der Elektrolyt mit Druckluft durchströmt und dadurch umgewälzt wird. Die im unteren Bereich der Zelle abgelagerte konzentrierte Schwefelsäure kann sich so mit dem restlichen Elektrolyt vermischen. Als Druckluftquelle kann ein üblicher Kompressor eingesetzt werden, der während oder nach dem jeweiligen Ladevorgang des Akkumulators eingeschaltet wird.

Problematisch ist es jedoch, dass Elektrolyt in das Schlauchsystem geraten kann und somit aus der Zelle austreten kann. Um einen Austritt von Elektrolyt zu vermeiden ist in der EP 1 672 723 A2 der Einsatz eines mechanischen Ventils innerhalb der Vorrichtung vorgesehen, jedoch kann diese Anordnung nachteilig sein.

Es besteht daher die **Aufgabe**, eine Vorrichtung zum Zuführen eines Gasstromes in eine Zelle eines Akkumulators zu schaffen, die die Betriebssicherheit des Akkumulators erhöht und kostengünstig herzustellen ist.

Die Aufgabe wird durch eine Vorrichtung zum Zuführen eines Gasstromes gemäß Anspruch 1 und einen Akkumulator gemäß Anspruch 11 gelöst. Bevorzugte Ausführungsformen sind in den Unteransprüchen beschrieben.

Die erfindungsgemäße Vorrichtung verfügt über einen mit einer Gasquelle verbindbaren Einlass und einen Auslass zur Verbindung mit dem Innenraum einer Akkumulatorzelle. Einlass und Auslass sind derart miteinander verbunden, dass im Betriebszustand die mit dem Einlass verbundene Gasquelle mit dem Innenraum der Akkumulatorzelle in Verbindung steht, so dass diese einen Gasstrom in den Innenraum einleiten kann.

Zur Bildung des Gasstromes kommen alle gängigen Gase in Betracht, grundsätzlich sollte das Gas so gewählt sein, dass keine unbeabsichtigten Reaktionen mit dem Elektrolyt auftreten. Bevorzugt kann Luft, Stickstoff oder Sauerstoff verwendet werden. Die Gasquelle sollte den Gasstrom mit einem geeigneten Druck zur Verfügung stellen; beispielsweise kann die Gasquelle eine Gasflasche oder eine Pumpe sein. Bevorzugt ist die Gasquelle ein Kompressor. Die Gasquelle kann weitere Elemente, wie beispielsweise Leitungen, Druckminderer, Volumenstrombegrenzer oder Mess- bzw. Steuerungseinrichtungen aufweisen.

Gemäß der Erfindung sind Trennmittel vorgesehen, die zwischen Einlass und Auslass der Vorrichtung angeordnet sind und gasdurchlässig und flüssigkeitsundurchlässig sind. Unter dem Begriff Trennmittel werden im Rahmen der vorliegenden Erfindung Mittel verstanden, die im Betriebszustand des Akkumulators eine permanente Trennung zwischen der mit dem Einlass verbundenen Gasquelle und dem mit dem Auslass verbundenen Innenraum der Zelle derart bewirken, dass ein Durchlass von Flüssigkeit verhindert ist, wobei gleichzeitig ein Durchlass von Gas bzw. des Gasstromes ermöglicht ist. Die Trennmittel sollten somit selektivpermeabel ausgebildet sein. Es ist hierfür ausreichend, dass die Trennmittel einen Durchlass von Flüssigkeit bei üblichen Betriebsparametern von Akkumulatorzellen, wie Druck oder Temperatur, verhindern. Eine absolute Dichtigkeit gegenüber Flüssigkeit ist hingegen nicht erforderlich.

Ein derartiger Aufbau der erfindungsgemäßen Vorrichtung erlaubt in vorteilhafter Weise, den Gasstrom in den Innenraum der Zelle zur Umwälzung des Elektrolyts einzuleiten, wobei gleichzeitig ein Elektrolytaustritt aus der Zelle vermieden wird. Ein mechanisches Schaltelement, welches zwischen mehreren Zuständen schaltet, wie beispielsweise ein Ventil, ist somit nicht erforderlich. Ferner werden die Trennmittel durch den Gasstrom selbstständig gereinigt, sollte Flüssigkeit aus der Zelle die Trennmittel erreichen und diese Verschmutzen.

Bevorzugt ist, dass die Trennmittel elektolytundurchlässig sind. Bei der Verwendung von Luft zur Bildung des Gasstromes ist es zweckmäßig, dass die Trennmittel luftdurchlässig sind.

Es ist grundsätzlich ausreichend, dass die Trennmittel derart richtungsabhängig ausgebildet sind, dass Elektrolyt nicht aus der Zelle austreten, aber gleichzeitig der Gasstrom in die Zelle gelangen kann. Die Trennmittel sollten daher bevorzugt mindestens in Richtung des Gasstromes, folglich vom Einlass der Vorrichtung in Richtung des Auslasses, gasdurchlässig und in entgegengesetzter Richtung flüssigkeitsundurchlässig sein.

Als Trennmittel können sämtliche Vorrichtungen eingesetzt sein, die die eingangs beschriebene Selektivpermeabilität aufweisen. Die Trennmittel sind mikroporös ausgebildet. Bevorzugt sind die Trennmittel als Trennschicht ausgebildet. Hierdurch ist der Aufbau und somit die Herstellung der Vorrichtung weiter vereinfacht.

Insbesondere kann durch die flächige Ausbildung als Trennschicht eine Verminderung der Querschnittsfläche innerhalb der Vorrichtung und somit ein Druckaufbau während der Zuführung des Gasstromes innerhalb der Zelle vermieden werden. Hierdurch ist auch der Einsatz von brandhemmenden Filterfritten an etwaig vorhandenen Entgasungsöffnungen der Akkumulatorzelle ermöglicht. Ferner ist die Gefahr des Verstopfens der Vorrichtung bei einer etwaigen Verschmutzung des Gasstromes mit Partikeln verringert.

Die Trennmittel sind als Membran ausgebildet. Entsprechende Membranen sind industriell verfügbar und weisen eine gute Haltbarkeit auf. Geeignete Membranen sind aus einem Polymerfilm gebildet. Zweckmäßig besteht die Membran aus säurefestem Material. Hierdurch kann die Haltbarkeit der Membran nochmals deutlich erhöht werden.

Es ist bevorzugt, dass der Einlass und der Auslass der Vorrichtung als Schlauchanschlusselemente ausgebildet sind. Die Schlauchanschlusselemente können hierbei axial konisch ausgebildete Ansätze aufweisen, um einen sicheren Halt eines Schlauches zu gewährleisten. Ebenfalls können die Schlauchanschlusselemente Schraub-, Bajonett- oder, je nach Anwendung, auch entsprechende Systemsteckverbinder zum Anschluss von Schlauchleitungen aufweisen.

Nach einer Weiterbildung der Erfindung weist die Vorrichtung ein Gehäuse mit einem Kragen auf, welcher die Membran entlang einer Umfangslinie stützt. Durch eine derartige Anordnung wird eine ausrechende Befestigung der Membran innerhalb des Gehäuses, bei gleichzeitiger nur minimaler Verringerung der für den Gasstrom zur Verfügung stehenden Querschnittsfläche erreicht. Je nach Anwendung können bevorzugt weitere Stützelemente innerhalb des Gehäuses gebildet sein, die die Membran auch punktuell stützen. Hierdurch ist die Aufnahme der Membran innerhalb des Gehäuses nochmals verbessert, ohne die Querschnittsfläche wesentlich zu verringern. Insbesondere bevorzugt sind die Stützelemente derart regelmäßig angeordnet, das die Membran auf der gesamten Membranfläche gleichmäßig gestützt ist.

Zweckmäßig weist die Vorrichtung einen zweiten Auslass zum Anschluss weiterer Akkumulatorzellen auf. Der zweite Auslass kann, je nach Anwendung, auf der Seite der Trennmittel angeordnet sein, auf der der erste Auslass angeordnet ist. Es ist jedoch bevorzugt, dass der zweite Auslass auf der Seite des Einlasses angeordnet ist. Insbesondere ist bevorzugt, dass die Vorrichtung T-förmig ausgebildet ist. Durch eine derartige Ausbildung ist eine gute Erreichbarkeit der Ein- und Auslässe gegeben. Besonders bevorzugt sind der Einlass und der zweite Auslass in einem Winkel von 90 Grad zueinander angeordnet.

Nach einer bevorzugten Weiterbildung weist der Auslass einen Schlauch zur Verbindung mit in der Zelle angeordnetem Elektrolyt auf. In dieser Weise ist eine Anpassbarkeit der Vorrichtung an die jeweilige Ausgestaltung der Akkumulatorzelle gegeben, wodurch eine besonders gute Umwälzung des Elektrolyts erzielbar ist.

Zweckmäßig ist die Vorrichtung mit einem Gehäuse der Zelle des Akkumulators in Eingriff bringbar, wodurch eine besonders kompakte Montage der Vorrichtung ermöglicht ist. Beispielsweise kann das Gehäuse der Zelle eine Öffnung aufweisen, in die der Auslass der Vorrichtung in einfacher Weise eingesteckt werden kann.

Ein erfindungsgemäßer Akkumulator mit mindestens einer Zelle und einer Vorrichtung zum Zuführen eines Gasstromes in die Zelle mit einem, mit einer Gasquelle verbindbaren Einlass und einem Auslass, welcher den Einlass mit dem Innenraum der Zelle verbindet, weist Trennmittel auf, die zwischen dem Einlass und dem Auslass angeordnet sind und gasdurchlässig und flüssigkeitsundurchlässig sind. Wie eingangs erläutert, ist es somit ermöglicht, eine gute Umwälzung des Elektrolyts zu erreichen, wobei gleichzeitig ein Austritt des Elektrolyts aus der Zelle vermieden wird.

Ein erfindungsgemäßes System zum Laden eines Akkumulators weist mindestens einem Akkumulator mit einer Zelle, eine Ladestromversorgung, eine Gaszufuhr und eine Vorrichtung zum Zuführen eines Gasstromes in die Zelle auf. Die Vorrichtung weist einen, mit der Gaszufuhr verbundenen Einlass und einen Auslass auf, welcher den Einlass mit dem Innenraum der Zelle verbindet, wobei Trennmittel vorgesehen sind, die zwischen dem Einlass und dem Auslass angeordnet sind und gasdurchlässig und flüssigkeitsundurchlässig sind. Durch ein derartiges System lässt sich der Akkumulator in vorteilhafter Weise sehr effizient und sicher laden.

Die Ladestromversorgung kann hierbei eine Gleichspannungsquelle sowie eine Steuerungseinheit, wie beispielsweise eine Mikroprozessoreinheit, und entsprechende Anschlussleitungen aufweisen. Die Gaszufuhr kann die eingangs beschriebene Gasquelle sowie entsprechende Zufuhrleitungen aufweisen.

Die Erfindung wird nachstehend anhand von Ausführungsbeispielen erläutert. In den Figuren zeigen:
- Fig. 1: in einer schematischen Schnittdarstellung eine Zelle eines Akkumulators mit einer erfindungsgemäßen Vorrichtung zum Zuführen eines Gasstromes gemäß einer ersten Ausführungsform;
- Fig. 2: in einer schematischen Schnittdarstellung die erfindungsgemäße Vorrichtung gemäß einer ersten Ausführungform;
- Fig. 3: in einer schematisch perspektivischen Darstellung die erfindungsgemäße Vorrichtung gemäß einer ersten Ausführungsform;
- Fig. 4: in einer schematisch perspektivischen Ansicht ein Detail der erfindungsgemäßen Vorrichtung nach Fig. 2 und
- Fig. 5: in einer schematischen Darstellung die erfindungsgemäße Vorrichtung gemäß einer zweiten Ausführungsform.

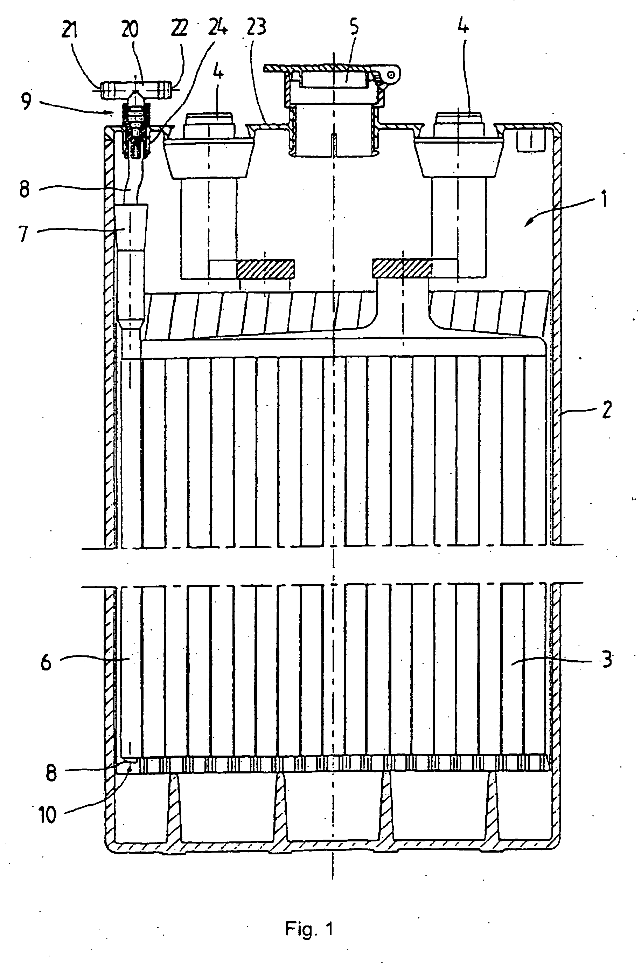

Fig 1. zeigt eine Schnittansicht einer Zelle 1 eines Akkumulators. Die Zelle weist ein Gehäuse 2 auf, in dem Platten 3 angeordnet und von flüssigem Elektrolyt umgeben sind. Die Platten 3 sind zum Laden bzw. Entladen des Akkumulators über Anschlüsse 4 elektrisch kontaktierbar. Zum Abführen von Überdruck in der Zelle 1 ist eine Entgasungsöffnung 5 im Gehäuse 2 vorgesehen, welcher mit einer hier nicht gezeigten Filterfritte verbunden ist.

Das Gehäuse 2 weist ferner eine Anschlussöffnung 9 auf, in den eine Vorrichtung 20 zum Zuführen eines Gasstromes 23 gemäß einem ersten Ausführungsbeispiel der Erfindung eingesteckt ist. Die Vorrichtung ist T-förmig ausgebildet und weist ein Gehäuse 26 mit einem Einlass 22, einem ersten Auslass 24 und einem zweiten Auslass 21 auf. Der Einlass 22 ist als Schlauchanschluss zur Verbindung mit einem Druckluftkompressor ausgebildet. Der zweite Auslass 21 erlaubt den Anschluss einer Schlauchleitung zur Verbindung von weiteren Akkumulatorzellen an den Druckluftkompressor.

Der Auslass 24 ist mit einem Schlauch 8 versehen, der im unteren Bereich 10 der Zelle mündet. In die Zelle eingebrachte Druckluft wird somit in den Bereich geführt, in dem es beim Laden des Akkumulators zur Ansammlung von konzentrierter Schwefelsäure kommt. Die konzentrierte Schwefelsäure kann so gut mit dem restlichen Elektrolyt vermischt werden. Der Schlauch 8 ist in einem rohrförmigen Element 6 geführt, welches fest mit dem Gehäuse 2 verbunden ist. Um einen Austausch des Schlauches 8 bei Bedarf zu erleichtern, weist das rohrförmige Element 6 einen Trichteransatz 7 auf. Der Schlauch 8 besteht aus einem säurefesten Material.

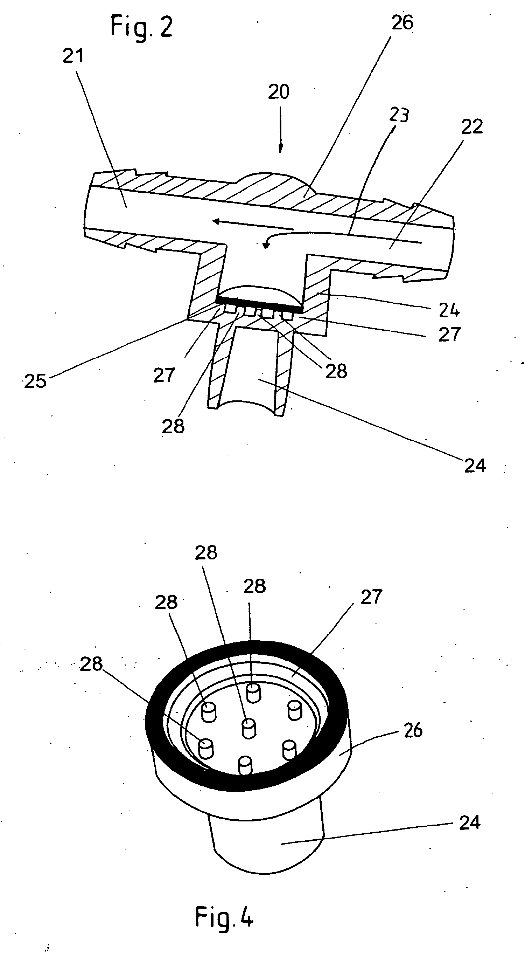

Eine schematische Schnittansicht der Vorrichtung 20 aus Fig. 1 ist in Fig. 2 gezeigt. Die Vorrichtung weist ein Gehäuse 26 auf, an welches der Einlass 22 und die Auslässe 24, 21 angeformt sind. Der Einlass 22 und der zweite Auslass 21 weisen axial konisch zulaufende Abschnitte auf, um entsprechende Anschlussschläuche sicher befestigen zu können. Innerhalb des Gehäuses 26 ist eine Membran 25 angeordnet. Die Membran 25 ist selektivpermeabel derart ausgebildet, dass durch den Einlass 22 einströmendes Gas diese passieren und durch den Auslass 24 in das Gehäuse 2 einer angeschlossenen Akkumulatorzelle 1 gelangen kann. Die Membran wirkt insofern wie eine Düse. Die Richtung des Gasstromes 23 ist in Fig. 2 durch zwei Pfeile dargestellt. Gleichzeitig ist die Membran für etwaig durch den Auslass 24 aufsteigenden Elektrolyten undurchlässig. Die Membran 25 besteht aus säurefestem Kunststoff. Durch die Membran 25 strömendes Gas reinigt diese in vorteilhafter Weise selbstständig, sollte aufsteigender Elektrolyt die Membran 25 erreichen. Wie gezeigt, ist die für den Gasstrom zur Verfügung stehende Querschnittsfläche innerhalb der Vorrichtung vorteilhaft nicht kleiner, als die Querschnittsfläche des Einlasses 22.

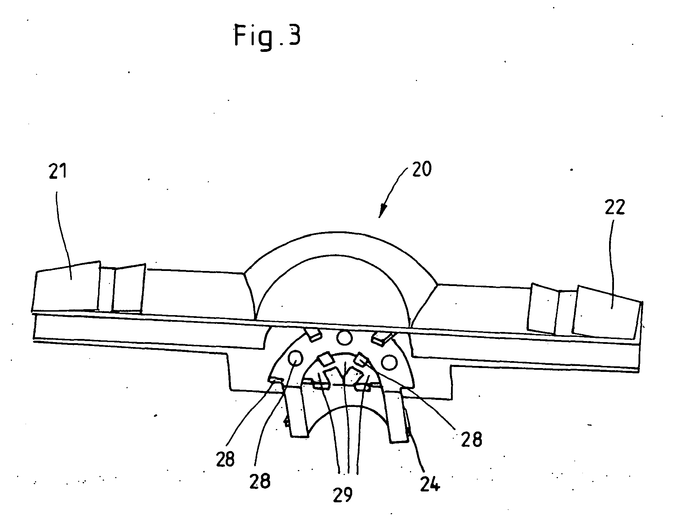

Eine schematisch-perspekivische Darstellung der erfindungsgemäßen Vorrichtung 20 nach Fig. 1 ist in Fig. 3 dargestellt. Es ist hier insbesondere zu erkennen, daß die Vorrichtung 20 dem Auslaß 24 in Strömungsrichtung des Gasstromes 23 vorgeschaltet einer Einrichtung zur bestimmungsgemäßen Aufnahme der Membran 25 aufweist. Diese Einrichtung kann bevorzugterweise einstückig mit dem Gehäuse 26 ausgebildet sein, wie in Fig. 3 dargestellt. Die Einrichtung verfügt über Öffnungen 29, durch die hindurch im Betriebsfall der Gasstrom 23 nach einem Passieren der Membran 25 hindurch in Richtung der in Fig. 3 nicht dargestellten Zelle 1 des Akkumulators strömt. Zur Abstützung der Membran 25 dienen Stützelemente 28 oder Stützelemente 28 in Kombination mit einem umfangsseitig der Einrichtung vorzugsweise geschlossen umlaufenden Kragen 27. Ein umlaufender Kragen 27 ist in Fig. 2 gezeigt, wohingegen Fig. 3 als quasi alternative Ausgestaltungsform ausschließlich Stützelemente 28 zeigt.

Wie insbesondere Fig. 3 erkennen läßt, ergibt sich die Besonderheit der erfindungsgemäßen Vorrichtung durch die im Vergleich zum Stand der Technik großen Öffnungen 29 für den im Betriebsfall in die Zelle 1 des Akkumulators einströmenden Gasstrom 23. Bei aus dem Stand der Technik bekannten Vorrichtungen, die über keine Membran 25 verfügen, ist die Durchlaßöffnung für den Gasstrom 23 im Durchmesser verhältnismäßig klein ausgebildet, um so vermeiden zu können, daß es zu einem Druckabfall innerhalb des Gaszuführungssystems kommt. Wenn nämlich mehrere Akkumulatorzellen 1 hintereinander geschaltet an ein gemeinsames Gaszuführungssystem angeschlossen sind, so kann bei einer zu großen Durchgangsöffnung 29 pro Akkumulatorzelle 1 in nachteiliger Weise der Fall auftreten, daß sehr viel Gas aufgrund einer zu großen Durchgangsöffnung 29 in die ersten der hintereinander geschalteten Akkumulatorzellen 1 einströmt, was zur Konsequenz hat, daß für die letzten der hintereinander geschalteten Akkumulatorzellen nicht mehr genügend Druck im Gaszuführungssystem vorhanden ist, so daß die letzten der hintereinander geschalteten Akkumulatorzellen 1 nicht mehr mit hinreichend Gas zur Durchmischung der Elektrolyten versorgt werden können. Die erfindungsgemäße Ausgestaltung schafft hier Abhilfe. Aufgrund der erfindungsgemäß vorgesehenen Membran 25 ist es möglich, eine im Vergleich zum Stand der Technik vergleichsweise im Durchmesser groß ausgebildete Durchgangsöffnung 29, das heißt Öffnung 29 vorzusehen. Es können sogar mehrere Öffnungen 29 ausgebildet sein, wie in Fig. 3 dargestellt. Gleichwohl tritt nicht das Problem eines ungewollten Druckverlustes im Gaszuführungssystem auf, wie dies bei den aus dem Stand der Technik bekannten Einrichtungen der Fall ist. Da es die erfindungsgemäße Ausgestaltung erlaubt, vergleichsweise große Durchgangsöffnungen 29 vorzusehen, ergeben sich mit der erfindungsgemäßen Vorrichtung zwei weitere wesentliche Vorteile. Zum einen besteht im Unterschied zum Stand der Technik nicht die erhöhte Gefahr, daß die Durchgangsöffnungen 29 verstopfen können, was bei den aus dem Stand der Technik bekannten und vergleichsweise klein im Durchmesser ausgeführten Öffnungen 29 im alltäglichen Praxiseinsatz regelmäßig vorkommt. Darüber hinaus erlaubt es die erfindungsgemäße Ausgestaltung, Flammschutzeinrichtungen, wie zum Beispiel Fritten vorzusehen, was bei aus den aus dem Stand der Technik bekannten Anordnungen aufgrund der verhältnismäßig kleinen Durchmesser der Durchgangsöffnungen 29 nicht möglich ist. Damit erweist sich die erfindungsgemäße Ausgestaltung nicht nur einfacher in der Handhabung, sie ist auch sicherer.

Die in Fig. 3 der besseren Übersicht wegen nicht dargestellte Membran 25 wirkt in Kombination mit den zugeordneten Öffnungen 29 wie eine Düse. Allerdings gehen mit der erfindungsgemäßen Ausgestaltung nicht die Nachteile einher, wie sie bei der Verwendung einer tatsächlichen Düse vorkommen.

Fig. 4 zeigt eine isolierte Draufsicht auf den auslassseitigen Teil der Vorrichtung 20 nach Fig. 2. Zur Aufnahme der Membran 25, welche aus Gründen der Übersichtlichkeit hier nicht gezeigt ist, dient ein Kragen 27 sowie eine Vielzahl von Stützelementen 28. Anstelle eines Kragens 27 können auch weitere Stützelemente 28 vorgesehen sein, wie in Fig. 3 dargestellt. Während der Kragen 27 die Membran 25 entlang einer Umfangslinie stützt, sind die Stützelemente 28 so angeordnet, dass die Fläche der Membran 25 gleichmäßig gestützt ist. Damit die Querschnittfläche, bedingt durch die Stützelemente 28, nicht gegenüber der Querschnittsfläche des Einlasses 22 verringert ist, weist der Bereich des Gehäuses 26, in dem der Kragen 27 gebildet ist, eine deutlich vergrösserte Querschnittsfläche auf. Die vorstehend schon anhand von Fig. 3 beschriebenen Öffnungen 29 sind der besseren Übersichtlichkeit wegen in den Fign. 2 und 4 nicht dargestellt.

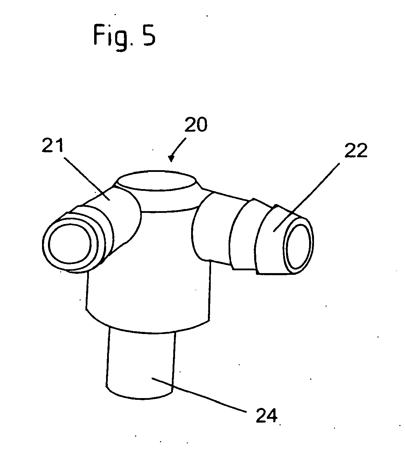

Ein zweites Ausführungsbeispiel der Erfindung ist in einer perspektivischen Ansicht in Fig. 5 gezeigt. Gegenüber dem ersten Ausführungsbeispiel sind der Einlass 22 und der zweite Auslass 21 hier in einem Winkel von 90 Grad angeordnet. Diese alternative Ausführung kann, je nach Konstruktion des Akkumulators, für die einfache Verbindung der Vorrichtung 20 zu weiteren Akkumulatorzellen sinnvoll sein.

### Bezugszeichenliste

- 1: Zelle
- 2: Gehäuse
- 3: Platte
- 4: Anschluß
- 5: Entgasungsöffnung
- 6: Element
- 7: Trichteransatz
- 8: Schlauch
- 9: Anschlußöffnung
- 10: Bereich
- 20: Vorrichtung
- 21: Auslaß
- 22: Einlaß
- 23: Gasstrom
- 24: Auslaß
- 25: Membran
- 26: Gehäuse
- 27: Kragen
- 28: Stützelement
- 29: Öffnung

## Patentansprüche

1. Vorrichtung (20) zum Zuführen eines Gasstromes in eine Zelle (1) eines Akkumulators mit
- einem, mit einer Gasquelle verbindbaren Einlass (22) und
- einem Auslass (24) zur Verbindung mit dem Innenraum der Zelle (1),
- wobei der Einlass (22) und der Auslass (24) miteinander verbunden sind,
**dadurch gekennzeichnet,**
**dass** als Membran aus einem Polymerfilm ausgebildete selektivpermeable, mikroporöse Trennmittel (25) vorgesehen sind, die zwischen dem Einlass (22) und dem Auslass (24) angeordnet sind und gasdurchlässig und flüssigkeitsundurchlässig sind, wobei ein Durchlass von Flüssigkeit verhindert und gleichzeitig ein Durchlass von Gas ermöglicht ist.

2. Vorrichtung nach Anspruch 1, **dadurch gekennzeichnet, dass** die Trennmittel elektrolytundurchlässig sind.

3. Vorrichtung nach einem der vorangehenden Ansprüche, **dadurch gekennzeichnet, dass** die Trennmittel luftdurchlässig sind.

4. Vorrichtung nach einem der vorangehenden Ansprüche, **dadurch gekennzeichnet, dass** die Trennmittel in Richtung des Gasstromes gasdurchlässig und in entgegengesetzter Richtung zum Gasstrom flüssigkeitsundurchlässig sind.

5. Vorrichtung nach einem der vorangehenden Ansprüche, **dadurch gekennzeichnet, dass** der Einlass (22) und der Auslass (24) als Schlauchanschlusselemente ausgebildet sind.

6. Vorrichtung nach einem der vorangehenden Ansprüche, **dadurch gekennzeichnet, dass** die Vorrichtung (20) ein Gehäuse (26) mit einem Kragen (27) aufweist, der die Membran (25) entlang der Umfangslinie stützt.

7. Vorrichtung nach Anspruch 6, **dadurch gekennzeichnet, dass** das Gehäuse (26) Stützelemente (28) aufweist, welche die Membran (25) punktuell stützen.

8. Vorrichtung nach einem der vorangehenden Ansprüche, **dadurch gekennzeichnet, dass** die Vorrichtung (20) einen zweiten Auslass (21) zum Anschluss weiterer Zellen aufweist.

9. Vorrichtung nach einem der vorangehenden Ansprüche, **dadurch gekennzeichnet, dass** der Auslass (24) einen Schlauch (8) zur Verbindung mit in der Zelle (1) angeordnetem Elektrolyt aufweist.

10. Vorrichtung nach einem der vorangehenden Ansprüche, **dadurch gekennzeichnet, dass** der Auslass (24) der Vorrichtung (20) mit dem Gehäuse (2) der Zelle (1) in Eingriff bringbar ist.

11. Akkumulator mit mindestens einer Zelle (1), die ein Gehäuse (2) aufweist, und mit einer Vorrichtung (20) zum Zuführen eines Gasstromes in die Zelle (1), wobei das Gas so gewählt ist, dass keine unbeabsichtigten Reaktionen mit dem Elektrolyten auftreten, wobei die Vorrichtung (20) zum Zuführen des Gasstromes in die Zelle (1) einen mit einer Gasquelle verbindbaren Einlass (22) und einen Auslass (24) aufweist, welcher den Einlass (22) mit dem Innenraum der Zelle (1) verbindet, zu welchem Zweck der Auslass (24) einen Schlauch (8) zur Verbindung mit dem in der Zelle angeordneten Elektrolyten aufweist, wobei das Gehäuse (2) eine Anschlussöffnung (9) aufweist, so dass der Schlauch (8) im unteren Bereich der Zelle (1) mündet,
**dadurch gekennzeichnet,**
**dass** die Vorrichtung (20) zum Zuführen des Gasstromes in die Zelle (1) nach einem der vorhergehenden Ansprüche ausgebildet ist.

12. Akkumulator nach einem der Ansprüche 11, **dadurch gekennzeichnet, dass** die Zelle (1) eine Entgasungsöffnung (5) aufweist, die mit einer Filterfritte verbunden ist.

## Claims

1. A device (20) for supplying a gas stream into an accumulator cell (1), comprising
- an inlet (22) which can be connected to the gas source and
- an outlet (24) for being connected to the interior of the cell (1),
- wherein the inlet (22) and the outlet (24) are connected to each other,
**characterized in**
**that** selectively permeable micro-porous separating means (25) made of a polymer film are provided as membrane, which separating means are located between the inlet (22) and the outlet (24) and are gas permeable and liquid impermeable, wherein a passage of liquid is prevented and simultaneously a passage of gas is enabled.

2. A device according to claim 1, **characterized in that** the separating means are electrolyte impermeable.

3. A device according to one of the preceding claims, **characterized in that** the separating means are air permeable.

4. A device according to one of the preceding claims, **characterized in that** the separating means are gas permeable in the direction of the gas stream and liquid impermeable in the opposite direction with respect to the gas stream.

5. A device according to one of the preceding claims, **characterized in that** the inlet (22) and the outlet (24) are hose connection elements.

6. A device according to one of the preceding claims, **characterized in that** the device (20) comprises a housing (26) with a collar (27) which supports the membrane (25) along the circumferential line.

7. A device according to claim 6, **characterized in that** the housing (26) comprises supporting elements (28) which support the membrane (25) at different spots.

8. A device according to one of the preceding claims, **characterized in that** the device (20) comprises a second outlet (21) for the connection to other cells.

9. A device according to one of the preceding claims, **characterized in that** the outlet (24) comprises a hose (8) for the connection to electrolyte which is placed in the cell (1).

10. A device according to one of the preceding claims, **characterized in that** the outlet (24) of the device (20) can be brought into engagement with the housing (2) of the cell (1).

11. An accumulator comprising at least one cell (1) which comprises a housing (2) and comprising a device (20) for supplying a gas stream into the cell (1), wherein the gas has been selected such that no unintended reactions with the electrolyte will take place, wherein the device (20) for supplying the gas stream into the cell (1) comprises an inlet (22) which can be connected to a gas source and an outlet (24) which connects the inlet (22) to the interior of the cell (1), for which purpose the outlet (24) comprises a hose (8) for the connection to the electrolyte placed in the cell, wherein the housing (2) comprises a connection opening (9) such that the hose (8) ends in the lower portion of the cell (1),
**characterized in**
**that** the device (20) for supplying the gas stream into the cell (1) is designed according to one of the preceding claims.

12. An accumulator according to claim 11, **characterized in that** the cell (1) comprises a degasifying aperture (5) which is connected to a filtering frit.

## Revendications

1. Dispositif (20) pour amener un flux de gaz dans une cellule (1) d'accumulateur, comprenant
- une entrée (22) qui est susceptible d'être reliée à une source de gaz et
- une sortie (24) pour être reliée à l'intérieur de la cellule (1),
- l'entrée (22) et la sortie (24) étant reliées l'une à l'autre,
**caractérisé en ce**
**que** des moyens de séparation (25) microporeux, sélectivement perméables et formés d'un film en polymère sont prévus en tant que membrane, les moyens de séparation étant disposés entre l'entrée (22) et la sortie (24) et étant perméables aux gaz et imperméables aux liquides, un passage de liquide étant ainsi prévenu et un passage de gaz étant simultanément rendu possible.

2. Dispositif selon la revendication 1, **caractérisé en ce que** les moyens de séparation sont imperméables aux électrolytes.

3. Dispositif selon l'une des revendications précédentes, **caractérisé en ce que** les moyens de séparation sont perméables à l'air.

4. Dispositif selon l'une des revendications précédentes, **caractérisé en ce que** les moyens de séparation sont perméables aux gaz dans la direction du flux de gaz et imperméables aux liquides dans la direction opposée par rapport au flux de gaz.

5. Dispositif selon l'une des revendications précédentes, **caractérisé en ce que** l'entrée (22) et la sortie (24) sont configurés comme des éléments de raccord de tuyaux flexibles.

6. Dispositif selon l'une des revendications précédentes, **caractérisé en ce que** le dispositif (20) comprend un boîtier (26) ayant un collet (27) qui appuie la membrane (25) le long de la ligne périphérique.

7. Dispositif selon la revendication 6, **caractérisé en ce que** le boîtier (26) comprend des éléments d'appui (28) qui appuient la membrane (25) ponctuellement.

8. Dispositif selon l'une des revendications précédentes, **caractérisé en ce que** le dispositif (20) comprend une deuxième sortie (21) pour le raccord d'autres cellules.

9. Dispositif selon l'une des revendications précédentes, **caractérisé en ce que** la sortie (24) comprend un tuyau flexible (8) pour être reliée à l'électrolyte disposé dans la cellule (1).

10. Dispositif selon l'une des revendications précédentes, **caractérisé en ce que** la sortie (24) du dispositif est susceptible d'être mise en prise avec le boîtier (2) de la cellule (1).

11. Accumulateur comprenant au moins une cellule (1) qui comprend un boîtier (2) et comprenant un dispositif (20) pour amener un flux de gaz dans la cellule (1), le gaz étant choisi de sorte que des réactions non intentionnelles avec l'électrolyte ne se font pas, le dispositif (20) pour amener le flux de gaz dans la cellule (1) comprenant une entrée (22) susceptible d'être reliée à une source de gaz et une sortie (24) qui relie l'entrée (22) à l'intérieur de la cellule (1), à quelle fin la sortie (24) comprend un tuyau flexible (8) pour être reliée à l'électrolyte disposé dans la cellule, le boîtier (2) comprenant une ouverture de raccord (9), de sorte que le tuyau flexible (8) débouche dans la partie inférieure de la cellule (1),
**caractérisé en ce**
**que** le dispositif (20) pour amener le flux de gaz dans la cellule (1) est configuré selon l'une des revendications précédentes.

12. Accumulateur selon la revendication 11, **caractérisé en ce que** la cellule (1) comprend une ouverture de dégazage (5) qui est reliée à une fritte de flitration.
